# EUROPÄISCHE PATENTSCHRIFT

(11) **EP 0 686 782 B1**
(45) Veröffentlichungstag und Bekanntmachung des Hinweises auf die Patenterteilung: **16.12.1998**
(21) Anmeldenummer: 95810317.8
(22) Anmeldetag: 11.05.1995
(51) Int. Cl.: F16C 13/02

(54) **Vorrichtung zur Behandlung von Flachmaterial**
Device for processing flat material
Dispositif de manipulation de produit laminé

(30) Priorität: 06.06.1994 CH 1769/94
(43) Veröffentlichungstag der Anmeldung: 13.12.1995
(73) Patentinhaber: Boegli-Gravures S.A., CH-2074 Marin (CH)
(72) Erfinder: Boegli, Charles, CH-2074 Marin (CH)
(74) Vertreter: AMMANN PATENTANWAELTE AG BERN

(56) Entgegenhaltungen:
- DE-A- 3 007 112
- FR-A- 1 309 022
- GB-A- 890 344
- US-A- 2 345 321
- US-A- 3 598 457
- US-A- 4 714 360

## Beschreibung

Die vorliegende Erfindung betrifft eine Vorrichtung zur Behandlung von Flachmaterial, insbesondere zum Prägen oder Satinieren von Folien, gemäss Oberbegriff von Patentanspruch 1. Dabei kann es sich um Folien aus Papier, Metall oder einer Kombination dieser Materialien handeln und daher müssen die Prägewalzen mit einem verhältnismässig hohen Druck gegeneinander gepresst werden, um die gewünschte Verformung, bzw. Gestaltung des Flachmaterials zu erzielen.

Aus der US-A-2 345 321 ist eine Lagerung für Walzwerke, Mischer und Kalander für die Bearbeitung von gummiartigen Mischungen bekannt, wobei eine Walze in ihrer Druckrichtung gegen ein starres Widerlager gepresst wird und in den übrigen Richtungen eine Ausweichbewegung durchführen kann.

Aus der DE-A-30 07 112 ist eine ähnliche Vorrichtung bekannt, bei welcher die eine Walze auf einer Achse drehbar gelagert ist, welche Achse mittels Druckmittelzylindern belastbar ist, um die auf ihr gelagerte eine Walze gegen die andere Walze anzupressen. Eine elastische Aufhängung ist damit in keinem Falle gegeben.

Bei Vorrichtungen dieser Art zum Satinieren und/oder Prägen von Verpackungsfolien mit feinen Mustern treten besondere Probleme auf. Hierbei besteht die Gefahr einer ungleichmässigen Einwirkung des Walzenpaares auf das Flachmaterial bis hin zu Materialstau und Materialfaltung, wenn die Achsen der Walzen nicht so zueinander ausgerichtet sind, dass sie unabhängig von Ungleichmässigkeiten des Materials, z. B. Dickenunterschieden in Querrichtung einer Papierbahn, einen gleichmässigen Druck über die ganze Breite des Flachmaterials ausüben. Einstellungsfehler der Satinier- oder Prägewalzen können sich aber auch aus Maschinentoleranzen ergeben, wobei vor allem Abweichungen von der korrekten gegenseitigen Stellung der Walzenachsen in Durchlaufrichtung des Flachmaterials, also rechtwinklig zur Richtung des Walzendruckes auf das Flachmaterial auftreten können. Auch solche Fehleinstellungen führen zu mangelhafter Qualität und zu einer erheblichen Reduktion der Lebensdauer der Walzen, insbesondere von Satinier- oder Prägewalzen mit ineinandergreifenden Satinier- bzw. Prägeelementen. Um solche Fehler zu vermeiden, war es bisher erforderlich, die Arbeitsweise der Walzen dauernd zu überwachen und nötigenfalls von Hand fein nachzustellen, was einerseits Personal mit grosser Erfahrung erfordert, und andererseits zu Stillstandzeiten der Anlage führt.

Ziel vorliegender Erfindung ist es, eine Vorrichtung der oben erwähnten Art so auszuführen, dass eine selbsttätige Ausrichtung der Walzen eines Paares erfolgt und damit Mängel am Produkt, übermässige Abnützung der Walzen und Stillstandzeiten vermieden werden können, ohne dass eine ständige Ueberwachung der Anlage erforderlich wäre. Dieses Ziel wird mit der Vorrichtung gemäss Anspruch 1 erreicht.

Es hat sich das überraschende Ergebnis gezeigt, dass mit verhältnismässig einfachen und nicht besonders kritischen Massnahmen die gewünschte automatische Ausrichtung der Walzenachsen sowohl in ihrer Druckrichtung als auch senkrecht dazu in der Durchlaufrichtung des Flachmaterials erreicht werden kann, wobei unter "Durchlaufrichtung" nicht nur die Bewegungsrichtung sondern auch die Ebene des Flachmaterials im Bereich der Walzen zu verstehen ist. Damit kann ein tadelloses Produkt erzielt werden. Sowohl Ungleichmässigkeiten des Flachmaterials als auch Maschinentoleranzen werden dabei ausgeglichen und die Beanspruchung der Walzen ist entscheidend herabgesetzt bzw. deren Lebensdauer erhöht.

Das gilt in besonderem Masse unter anderem für Satinierwalzen mit im Betrieb ineinandergreifenden, feinen Zahnungen, die auch die eine nicht angetriebene Walze ohne zusätzliches Synchronisiergetriebe mitnehmen. In diesem Falle wie auch bei Prägewalzen erlaubt die elastische Einstellbarkeit der Walzenachsen ein optimales Ineinandergreifen der Oberflächenstrukturen der Walzen, was sowohl die Inbetriebnahme erleichtert als auch im Betrieb die Abnützung erhöhende Abweichungen von der optimalen gegenseitigen Einstellung vermeidet.

Die Erfindung wird nun anhand eines konkreten Ausführungsbeispieles näher erläutert, worauf einige Ausführungsvarianten erwähnt werden.
- Fig. 1: zeigt einen Axialschnitt durch ein Walzenpaar,
- Fig. 2: zeigt einen Teilschnitt nach Linie II-II in Fig. 1, und
- Fig. 3: zeigt einen vergrösserten Teilschnitt nach Linie III-III in Fig. 2.

Die dargestellte Vorrichtung weist zwei Prägewalzen 1 und 2 auf. Die Achse der Prägewalze 2 ist im angedeuteten Maschinengestell 3 gelagert und kann mit einem nicht dargestellten Antrieb gekuppelt sein. Die Prägewalze 1 ist mittels Kugellagern 4 frei drehbar auf einer Achse 5 gelagert. Die Enden der Achse 5 greifen in eine Nut 6 je eines Schlittens 7, der im Maschinengestell vertikal verschiebbar geführt und über einen Pleuel 8 mit je einem pneumatischen Zylinder 9 verbunden ist. Mittels der beiden pneumatischen Zylinder 9 kann die Walze 1 gleichmässig gegen die Walze 2 angepresst werden.

Die Enden der Achse 5 sind in den Schlitten 7 nicht starr gelagert, sondern elastisch auslenkbar. Im Bereiche der Nuten 6 weisen die Achsen 5 eine ebene Anfräsung 10 auf, mit welcher sie gegen den ebenen Nutengrund anliegen und damit in eindeutiger Drehlage gehalten sind. Beide Achsenden sind mit einer Querbohrung 11 versehen, durch welche ein mit dem Schlitten 7 verschraubter Bolzen 12 ragt. Zwischen den Kopf 13 jedes Bolzens und eine den Bolzen umgebende konkave, beispielsweise sphärische, Fläche der Achsenden 5 ist ein Satz von Tellerfedern 14 eingesetzt, die mit bestimmtem Druck zwischen dem Kopf 13 des Bolzens 12 und dem Ende der Achse 5 eingespannt ist.

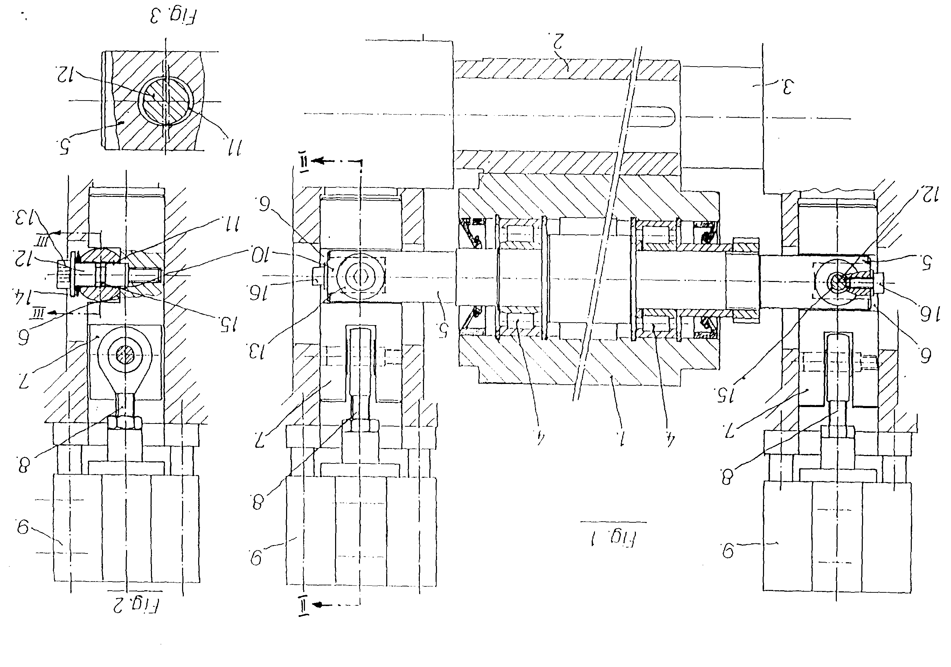

Wie Fig. 3 zeigt, greift der Bolzen 12 mit Spiel durch die Bohrung 11, wobei in Fig. 3 angedeutet ist, dass das Spiel in Vertikalrichtung, d. h. in Andruckrichtung der Walzen geringer ist als in Durchlaufrichtung des Materials zwischen den Walzen. Unter der Wirkung der Tellerfedern 14 wird die Achse 5 in einer Lage gehalten, in welcher die Bolzen 12 mit allseitigem Spiel durch die Bohrungen 11 der Achsenden greifen, wobei das Spiel in Druckrichtung und in Durchlaufrichtung beispielsweise bis 2 mm betragen kann. Die mögliche elastische Auslenkung der Achse ist daher auf beiden Seiten durch Anschlag begrenzt. Zur gegenseitigen Sicherung der Bolzen 12 und den Enden der Achse 5 sind die Bolzen 12 mit einer Ringnut 15 versehen, in welche eine Sicherungsschraube 16 greift.

Im Betrieb kann nun die Walze 1 stets elastisch ausweichen bzw. elastisch zugestellt werden, wenn irgendwelche Ungleichmässigkeiten auftreten. Versuche haben gezeigt, dass der oben beschriebene Aufbau Betriebsstörungen und Qualitätseinbussen ohne jede Ueberwachung und jeden Eingriff zu vermeiden gestattet. Die elastische Aufhängung der Achse 5 und der Anpressdruck der Zylinder 9 sind vorzugsweise so bemessen, dass unter diesem Anpressdruck keine Relativbewegung zwischen der Achse 5 und den Bolzen 12 stattfindet, solange sich kein Flachmaterial zwischen den Walzen befindet.

Wie erwähnt ist in der Zeichnung ein bestimmtes Ausführungsbeispiel dargestellt und oben beschrieben, aber es sind verschiedene Ausführungsvarianten möglich. In bestimmten Fällen könnte unter Umständen keine der Walzen angetrieben sein. Es können aber auch beide Walzen synchron angetrieben sein. Es wäre auch denkbar, jede Walze nur in einer Richtung, also beispielsweise die Walze 1 in Durchlaufrichtung und die Walze 2 in Druckrichtung elastisch auslenkbar anzuordnen. Die elastische Aufhängung könnte in anderer Weise erfolgen. Es wäre beispielsweise möglich, die beiden Enden der Achse 5 als Biegestäbe auszubilden oder mit solchen zu verbinden, welche eine bestimmte elastische Durchbiegung gestatten. Dabei könnten diese Stäbe auch einen Querschnitt aufweisen, welcher zu unterschiedlichen elastischen Kräften bzw. Auslenkungen in Druckrichtung und in Durchlaufrichtung führt. In gewissen Fällen braucht auch keine der Walzen angetrieben zu sein. Es genügt dann, das Flachmaterial zwischen den Walzen durchzuziehen. Auch wenn oben insbesondere Satinier- und Prägewalzen erwähnt sind, ist die Erfindung nicht auf solche Walzen beschränkt, sondern sie kann für beliebige Bearbeitungen von Flachmaterial angewendet werden, wo entsprechende Probleme auftreten.

Anstelle von separaten, pneumatischen Zylindern 9, die je auf einen Schlitten 7 wirken, könnte auch ein gemeinsamer Zylinder vorgesehen sein, der über ein Joch auf beide Schlitten wirkt. Der Angriffspunkt des gemeinsamen Zylinders am Joch kann je nach Breite und Lage des Flachmaterials verstellt werden. Anstelle der nur in einer Richtung geführten Schlitten 7 könnten Kreuzschlitten vorgesehen sein, und die Federcharakteristik von in Druckrichtung und in Durchlaufrichtung auf den Kreuzschlitten wirkenden elastischen Elementen könnten verschieden gewählt werden.

## Patentansprüche

1. Vorrichtung zur Behandlung von Flachmaterial, insbesondere zum Prägen oder Satinieren von Folien, mit mindestens einem Paar von Walzen (1, 2), zwischen denen das Flachmaterial unter Druck durchgeführt werden kann, wobei eine bewegliche Aufhängung (5, 11 - 14) von Walzenlagern (4) derart vorgesehen ist, dass eine gegenseitige Bewegung der Walzen (1, 2) möglich ist, dadurch gekennzeichnet, dass die Lager (4) der einen oder beider Walzen (1, 2) in ihrer Druckrichtung geführt und auslenkbar sind, wobei die Auslenkung elastisch begrenzt ist und rechtwinklig dazu, in Durchlaufrichtung des Flachmaterials, elastisch auslenkbar sind.

2. Vorrichtung nach Anspruch 1, dadurch gekennzeichnet, dass die Auslenkung der Walzenachse (5) durch Anschläge begrenzt ist.

3. Vorrichtung nach Anspruch 2, dadurch gekennzeichnet, dass das Spiel der Walzenachse (5) in Durchlaufrichtung und in Druckrichtung je bis 2 mm beträgt.

4. Vorrichtung nach einem der Ansprüche 1 bis 3, dadurch gekennzeichnet, dass die eine Walze (1) frei drehbar auf einer nicht drehbaren Achse (5) gelagert ist, die elastisch auslenkbar gelagert ist.

5. Vorrichtung nach Anspruch 4, dadurch gekennzeichnet, dass die Enden der Achse (5) Querbohrungen (11) aufweisen, durch die Bolzen (12) mit Spiel greifen, wobei die Enden der Achse (5) unter Federwirkung stehen, um die Wandung der Querbohrungen (11) im Abstand von den Bolzen (12) zu halten.

6. Vorrichtung nach Anspruch 5, dadurch gekennzeichnet, dass die elastische Aufhängung (5, 11-14) und die auf die Walzen (1, 2) wirkende Anpresskraft so bemessen sind, dass die Walzenachse (5) im Nichtbetriebszustand relativ zum Bolzen (12) nicht ausgelenkt ist.

7. Vorrichtung nach Anspruch 5 oder 6, dadurch gekennzeichnet, dass zwischen Köpfen (13) der Bolzen (12) und konkaven Flächen der Achsenden konvexe Tellerfedern (14) angeordnet sind.

8. Vorrichtung nach einem der Ansprüche 5 bis 7, dadurch gekennzeichnet, dass die Querbohrungen (11) unrunden Querschnitts eine grössere Abmessung in Durchlaufrichtung als in Druckrichtung aufweisen.

9. Vorrichtung nach einem der Ansprüche 1 bis 8, dadurch gekennzeichnet, dass die nicht elastisch auslenkbare Walze (2) des Walzenpaares angetrieben ist.

10. Vorrichtung nach einem der Ansprüche 1 bis 9, dadurch gekennzeichnet, dass die auslenkbare Walze (1) des Walzenpaares in Schlitten (7) gelagert ist, die mit je einem Druckantrieb, z. B. einem pneumatischen Zylinder (9) verbunden sind, oder dass ein gemeinsamer Druckantrieb über ein Joch auf die beiden Schlitten (7) wirkt.

11. Vorrichtung nach einem der Ansprüche 1 bis 10, dadurch gekennzeichnet, dass die Charakteristiken der Aufhängung (5, 11 - 14) in Druckrichtung der Walzen und in Durchlaufrichtung unterschiedlich sind.

## Claims

1. A device for the treatment of flat materials, more particularly for the embossing or calendering of foils, comprising at least one pair of rolls (1, 2) between which the flat material is passed under pressure while a displaceable suspension (5, 11 - 14) of roll bearings (4) is provided in such a manner as to allow a relative movement of the rolls (1, 2), characterised in that the bearings (4) of at least one or of both rolls (1, 2) are guided and capable of an excursion which is limited in an elastic manner in the pressure direction, and of an elastic excursion orthogonally thereto, i.e. in the travelling direction of the flat material.

2. Device according to claim 1, characterised in that the excursion of the roll axle (5) is limited by abutments.

3. Device according to claim 2, characterised in that the play of the roll axle (5) both in the travelling direction and in the pressure direction is up to 2 mm.

4. Device according to one of claims 1 to 3, characterised in that one of the rolls (1) is freely rotatably journalled on a non-rotatable axle (5) which is supported in an elastically deflectable manner.

5. Device according to claim 4, characterised in that the ends of the axle (5) are provided with transversal bores (11) with bolts (12) engaging therein with play, the ends of the axle (5) being under the action of springs in order to keep the walls of the transversal bores (11) at a distance from the bolts (12).

6. Device according to claim 5, characterised in that the elastic suspension (5, 11 - 14) as well as the pressure acting upon the rolls (1, 2) are so dimensioned that the roll axle (5) is not deflected relative to the bolt (12) when the device is out of operation.

7. Device according to claim 5 or 6, characterised in that convex disk springs (14) are disposed between the heads (13) of the bolts (12) and concave surfaces of the axle ends.

8. Device according to one of claims 5 to 7, characterised in that the transversal bores (11) have a non-circular cross-section which is larger in the travelling direction than in the pressure direction.

9. Device according to one of claims 1 to 8, characterised in that the roll (2) of the roll pair is driven which is not elastically deflectable.

10. Device according to one of claims 1 to 9, characterised in that the deflectable roll (1) of the roll pair is journalled in slides (7) which are each connected to a pressure drive, e.g. a pneumatic cylinder, or which are actuated by a common pressure drive by means of a yoke.

11. Device according to one of claims 1 to 10, characterised in that the characteristics of the suspension (5, 11 - 14) in the pressure direction of the rolls and in the travelling direction of the flat material are different.

## Revendications

1. Dispositif pour le traitement de plats, plus particulièrement pour l'estampage ou le satinage de feuilles, comprenant au moins une paire de cylindres (1, 2) entre lesquels les plats passent sous pression, une suspension mobile (5, 11 - 14) de paliers (4) des cylindres étant prévue de manière à permettre un mouvement relatif des cylindres (1, 2), caractérisé en ce que les paliers (4) d'un ou des deux cylindres (1, 2) sont guidés et capables d'une excursion dans leur direction de pression, ladite excursion étant limitée de manière élastique, et capables d'une excursion élastique dans la direction y orthogonale, c'est-à-dire dans la direction de passage desdits plats.

2. Dispositif selon la revendication 1, caractérisé en ce que l'excursion de l'axe (5) de cylindre est limitée par des butées.

3. Dispositif selon la revendication 2, caractérisé en ce que le jeu de l'axe (5) de cylindre est chaque fois inférieur ou égal à 2 mm dans la direction de passage et dans la direction de pression.

4. Dispositif selon l'une des revendications 1 à 3, caractérisé en ce que l'un des cylindres (1) tourne librement sur un axe non rotatif (5) qui est capable d'une excursion élastique.

5. Dispositif selon la revendication 4, caractérisé en ce que les extrémités de l'axe (5) présentent des alésages transversaux (11) par lesquels passent des boulons (12), lesdits boulons ayant du jeu dans les alésages, et les extrémités de l'axe (5) étant sous l'action de ressorts afin de tenir les parois des alésages transversaux (11) à l'écart des boulons (12).

6. Dispositif selon la revendication 5, caractérisé en ce que la suspension élastique (5, 11 - 14) et la force de pression agissant sur les cylindres (1, 2) sont dimensionnées de telle manière que l'axe (5) de cylindre n'exécute aucune excursion par rapport au boulon (12) en état hors service.

7. Dispositif selon la revendication 5 ou 6, caractérisé en ce que des ressorts à disques (14) sont disposés entre les têtes (13) des boulons (12) et des surfaces concaves aux extrémités de l'axe.

8. Dispositif selon l'une des revendications 5 à 7, caractérisé en ce que la dimension des alésages transversaux de coupe transversale non circulaire est plus grande en direction de passage qu'en direction de pression.

9. Dispositif selon l'une des revendications 1 à 8, caractérisé en ce que le cylindre (2) de la paire de cylindres qui n'est pas mobile de manière élastique est entraîné.

10. Dispositif selon l'une des revendications 1 à 9, caractérisé en ce que le cylindre mobile (1) de la paire de cylindres est logé dans des coulisseaux (7) qui sont reliés chacun à un entraînement à pression tel qu'un cylindre pneumatique (9) ou qui sont actionnés par un entraînement à pression commun par l'intermédiaire d'un joug.

11. Dispositif selon l'une des revendications 1 à 10, caractérisé en ce que les caractéristiques de la suspension (5, 11 - 14) en direction de pression des cylindres et en direction de passage sont différentes.
